# EUROPÄISCHE PATENTANMELDUNG

(11) **EP 4 155 259 A1**
(43) Veröffentlichungstag der Anmeldung: **29.03.2023**
(21) Anmeldenummer: 21020475.6
(22) Anmeldetag: 22.09.2021
(51) Int. Cl.: C01B 3/38, B01J 8/06, B01J 19/24, B01J 19/32

(54) **VERFAHREN ZUM HERSTELLEN VON SYNTHESEGAS MIT REDUZIERTEM DAMPFEXPORT**

(71) Anmelder: L'Air Liquide Société Anonyme pour l'Etude et l'Exploitation des Procédés Georges Claude, 75321 Paris (FR)
(72) Erfinder: Galliot, Charline, D-60439 Frankfurt am Main (DE); David, Marion, F-78350 Jouy-en-Josas (FR); Schmid McGuinness, Teja, D-60439 Frankfurt am Main (DE)
(74) Vertreter: Dropsch, Holger

(57) **Zusammenfassung**

Es wird ein Verfahren zum Herstellen von Synthesegas mit reduziertem Dampfexport durch katalytisches Dampfreformieren eines kohlenwasserstoffhaltigen Einsatzgases mit Dampf in einer Vielzahl von Reformerrohren in einem durch Brenner beheizten Reformerofen unter Bildung eines Dampfreformierungsrauchgases vorgeschlagen. Das Verfahren umfasst dabei eine Ausgestaltung der Reformerrohre als Reformerrohre mit internem Wärmeaustausch und die Verwendung eines strukturierten Katalysators. Für Exportdampfmengen zwischen 0 und 0,8 kg Exportdampf pro m_{N}³ erzeugten Wasserstoffs wirken diese Merkmale in synergistischer Weise zusammen, wenn bestimmte Dampfreformierungsbedingungen ausgewählt werden.

## Beschreibung

### Gebiet der Erfindung

Die Erfindung betrifft ein Verfahren zum Herstellen eines Wasserstoff und Kohlenoxide enthaltenden Synthesegases mit reduziertem Dampfexport durch katalytisches Dampfreformieren eines kohlenwasserstoffhaltigen Einsatzgases, bevorzugt Erdgas, mit Dampf unter Dampfreformierungsbedingungen in einer Vielzahl von Reformerrohren in einem durch Brenner beheizten Reformerofen unter Bildung eines Dampfreformierungsrauchgases.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die bislang meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Außenwände des Reformerofens sowie seine Decke und sein Boden sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite oder an den Seitenwänden des Reformerofens angebracht sind und direkt den Zwischenraum zwischen den Reformerrohren befeuern. Dabei erfolgt der Wärmeübergang auf die Reformerrohre durch Wärmestrahlung und konvektive Wärmeübertragung von den heißen Rauchgasen.

Nach Vorerhitzung durch Wärmetauscher oder befeuerte Heizer auf mindestens ca. 500 °C tritt das Kohlenwasserstoff-Dampf-Gemisch nach Enderhitzung auf ca. 500 bis 1000 °C in die Reformerrohre ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf. Zur Energieoptimierung oder bei Einsatzstoffen mit höheren Kohlenwasserstoffen kann nach dem Vorerhitzer ein sogenannter Prereformer zur Vorspaltung bzw. Vorreformierung des Einsatzstoffes eingesetzt werden. Der vorgespaltene Einsatzstoff wird dann in einem weiteren Erhitzer auf die gewünschte Reformerrohreintrittstemperatur erhitzt.

Das heiße Synthesegas-Produktgas wird nach Verlassen des Reformerofens in einem oder mehreren Wärmetauschern teilabgekühlt. Das teilabgekühlte Synthesegas-Produktgas durchläuft anschließend noch weitere Konditionierungsschritte, die von der Art des gewünschten Produktes oder des nachgeschalteten Verfahrens anhängig sind.

Die Dampfreformierung von Erdgas zeichnet sich durch ihren hohen Energiebedarf aus. Im Stand der Technik finden sich daher bereits Vorschläge, bei denen durch optimierte Verfahrensgestaltung, beispielsweise durch Energierückgewinnung, versucht werden soll, den Bedarf an Fremdenergie zu minimieren. So wurde von Higman bei der EURO-GAS-90-Konferenz, Trondheim, Juni 1990, veröffentlicht auch unter http://www.higman.de/gasification/papers/eurogas.pdf (Abruf am 27.09.2011), ein sogenanntes HCT-Reformerrohr mit internem Wärmeaustausch vorgestellt. Dieses umfasst ein äußeres, mit Katalysator gefülltes und von außen beheiztes Reformerrohr, bei dem das Katalysatorbett von dem Einsatzgas von oben nach unten durchströmt wird. Im Inneren des Katalysatorbettes befinden sich zwei gewendelte, als Doppelhelix angeordnete Wärmetauscherrohre aus einem geeigneten Material, durch die das teilreformierte Gas nach Verlassen des Katalysatorbettes strömt und dabei einen Teil seiner fühlbaren Wärme an den am Katalysator ablaufenden Dampfreformierungsprozess abgibt. Nachteilig ist hierbei allerdings der höhere Druckverlust aufgrund der längeren Leitungsstrecke des Gases durch die wendelförmig ausgestalteten Wärmetauscherrohre. Ein auf dieser Grundlage weiterentwickeltes Reformerrohr mit internem Wärmeaustausch wird auch in der internationalen Patentanmeldung WO 2013/068416 A1 gelehrt.

Bei der Weiterentwicklung der Dampfreformierungstechnologie besteht neben der Optimierung des Wärmehaushalts des Reformerrohrs eine weitere Zielrichtung in der Minimierung des Druckverlusts, die aufgrund der Reduzierung der benötigten Verdichtungsarbeit wirtschaftliche Vorteile erbringt.

Diese beiden Themengebiete wirken insofern zusammen, da konstruktive Maßnahmen, die auf die Verbesserung des Wärmehaushalts im Reformerrohr abzielen, oftmals den Druckverlust über das Reformerrohr in unerwünschter Weise erhöhen. Soll der Gesamtdruckverlust über das Reformerrohr daher konstant gehalten oder sogar reduziert werden, verbleibt als wesentliche Einflussgröße eine Reduzierung des Druckverlustes über den vorhandenen Reformierungskatalysator.

Eine Möglichkeit zur Reduzierung des Druckverlustes über den Reformierungskatalysator besteht in der Verwendung strukturierter Katalysatoren, beispielsweise in Form strukturierter Packungen, die einen Reformierungskatalysator enthalten, wodurch strukturierte Katalysatoren entstehen. Unter einer strukturierten Packung versteht der Fachmann - in Abgrenzung von unstrukturierten Packungen bzw. Partikelschüttungen - speziell entworfene Behältereinbauten, wie sie beispielsweise in Absorberkolonnen, Destillationskolonnen und Festbettreaktoren eingesetzt werden. Eine strukturierte Packung besteht oft aus dünnen, gewellten und gelochten Metallplatten bzw. Drahtnetzen. Ferner können keramische Körper hergestellt werden, die dann als Wabenkörper oder Honeycombs bezeichnet werden. Das Design der strukturierten Packungen soll ihre spezifische Oberfläche maximieren und somit einen optimalen Austausch zwischen den unterschiedlichen Phasen bei minimalem Druckwiderstand oder Druckverlust gewährleisten. Bei einer heterogen katalysierten Reaktion wie der Dampfreformierung soll mithin die Austauschfläche zwischen dem strukturierten Katalysator und der Gasphase maximiert werden. Unter einem strukturiertem Katalysator wird demgemäß eine strukturierte Packung verstanden, die einen Katalysator enthält, indem dieser beispielsweise als Beschichtung auf die Oberfläche der strukturierten Packung aufgebracht oder in Form kleiner Partikel in die Strukturelemente der strukturierten Packung eingebettet wird.

Die Verwendung strukturierter Katalysatoren für die Dampfreformierung von Kohlenwasserstoffen ist an sich bekannt und wird beispielsweise in den Patentveröffentlichungen EP 1 857 174 A1 und EP 1 944 269 A1 beschrieben.

Die US-Patentanmeldung US 2012/0195801 A1 beschreibt den Aufbau strukturierter Katalysatoren im Zusammenhang mit der Dampfreformierung. Gelehrt werden dort stapelbare Packungsmodule oder -segmente, die um einen zentralen Führungsstab herum angeordnet sind. Die Packungssegmente weisen eine Fächer- bzw. Zickzackform auf und werden auf ihrer Unterseite von einem kreisringförmigen Stützelement getragen. Die Packungssegmente sind aus Metallfolien gefertigt und mit einem katalytisch wirkenden Material, beispielsweise dem für die Dampfreformierung aktiven Nickel, beschichtet. Durch die Fächerform werden radial verlaufende Strömungskanäle gebildet und somit die Verweilzeit des Einsatzgases in der strukturierten Packung erhöht. Das Reaktorrohr wird durch Aufeinanderstapeln einzelner Packungssegmente mit diesen ausgefüllt.

Bei endothermen Prozessen sind strukturierte Katalysatoren dafür bekannt, dass sie im Vergleich zu herkömmlichen Katalysatorpellets mehrere Vorteile bieten. Strukturierte Katalysatoren weisen einen höheren Wärmeübergangskoeffizienten und eine größere geometrische Oberfläche auf als Katalysatorpellets. Beides führt zu einer verbesserten Reaktionskinetik und höheren Umsatzraten für ein gegebenes Katalysatorvolumen. Außerdem weisen strukturierte Katalysatoren einen höheren Hohlraumanteil auf, was zu einem geringeren Druckabfall bei einem gegebenen Massenstrom führt.

Bei der Reformierung von Methan mit Dampf oder Kohlendioxid kann die Verwendung eines strukturierten Katalysators den internen Wärmeübergang von der Innenwand des Reformerrohrs auf das Prozessgas auf zwei Arten verbessern. Erstens erhöht der hohe intrinsische Wärmeübergangskoeffizient des strukturierten Katalysators die dem Prozessfluid zugeführte Wärmemenge und damit die Reaktionsgeschwindigkeit und den Umwandlungsgrad. Zweitens ermöglicht der geringe Druckabfall des strukturierten Katalysators höhere Durchflussraten. Da der interne Wärmeübergang auch durch Konvektion angetrieben wird, ist es daher von Interesse, den Massenstrom so weit wie möglich zu erhöhen.

Eine Erhöhung des Massenstroms bedeutet auch eine Verringerung der Verweilzeit, mit der Folge, dass die Methanumsetzung beeinträchtigt werden könnte. Strukturierte Katalysatoren weisen jedoch eine viel größere verfügbare Oberfläche für die Reaktion auf, was die verringerte Verweilzeit bei höheren Flussraten ausgleicht.

Ähnlich wie bei einem Aufbau mit Rohren mit Rippen kann ein Dampf-Methan-Reformer mit strukturiertem Katalysator Vorteile durch einen höheren Reformerwirkungsgrad bringen, um den Erdgasverbrauch zu senken, oder durch die Reduzierung der Anzahl der Rohre, um Einsparungen bei den Investitionskosten zu erzielen, wie in EP 0 025 308 B1 offenbart.

In EP 0 305 203 A2 wird gelehrt, dass bei der Dampf-Methan-Reformierung ein niedriger Druckabfall und ein hoher Wärmeübergangskoeffizient die gewünschten Prozessbedingungen darstellen. Es wird weiter gelehrt, dass der Vorteil der Verwendung von strukturiertem Katalysator anstelle von kommerziellen Katalysatorpellets darin besteht, dass ein höherer Wandwärmeübergang und damit höhere Konversionsraten erreicht werden, ohne den Druckabfall zu erhöhen. Es wird auch gelehrt, dass der höchste Umwandlungsgrad für eine gegebene Menge an Katalysator erreicht wird, wenn bei der höchstmöglichen Temperatur gearbeitet wird. Daraus folgt, dass sich die Betriebstemperatur oft der oberen Grenztemperatur für das Rohrmaterial nähert und dass eine gleichmäßige Temperaturverteilung entlang der Rohrwand wünschenswert ist, da sie die höchste Reformierungstemperatur ermöglicht. Weiterhin werden die Vorteile einer strukturierten Katalysatoranordnung gelehrt, um eine gleichmäßige Temperaturverteilung entlang des Reformerrohres zu erreichen.

In der EP 0 855 366 werden verschiedene Prozessparameter für den optimalen Einsatz eines strukturierten Katalysators bei der Methandampfreformierung offenbart. Insbesondere wird der Betrieb bei hohen Massenströmen gelehrt.

Die Verwendung strukturierter Katalysatoren statt von Schüttungen fester Katalysatorpartikel eröffnet demnach Möglichkeiten zur weiteren Optimierung des Dampfreformierungsverfahrens, insbesondere für besondere Betriebsweisen wie der Erzeugung begrenzter Mengen von Exportdampf. Dampfreformierungsanlagen erzeugen in effizienter Weise zwei Hauptprodukte, nämlich Synthesegas und einen unter Umständen aus mehreren Teildampfströmen bestehenden Produktdampfstrom, der ganz oder teilweise als Exportdampf abgegeben wird. Dabei sind die Verbraucher des Synthesegas-Produktes oft nicht identisch mit den Abnehmern des Exportdampfes. Nachteilig ist dabei, dass daher Diskrepanzen zwischen der Synthesegas-Produktion und der Abnahme des Exportdampfes auftreten können, da die Produktionsraten der beiden Produkte Synthesegas und Produktdampf aneinander gekoppelt sind und die Produktionsrate des Exportdampfes nur in sehr geringem Maße angepasst werden kann. Es besteht daher weiterer Bedarf an Dampfreformierungsverfahren, die es ermöglichen, die Produktionsraten von Synthesegas und von Dampf voneinander zu entkoppeln, wobei die vorteilhaften Eigenschaften strukturierter Katalysatoren genutzt werden sollen.

### Beschreibung der Erfindung

Die Aufgabe der vorliegenden Erfindung besteht daher darin, ein Verfahren zur Dampfreformierung von Kohlenwasserstoffen mit variablem, insbesondere mit reduziertem Dampfexport anzugeben, das die Eigenschaften strukturierter Katalysatoren nutzt, die insbesondere in Reformerrohren mit internem Wärmeaustausch angeordnet sind.

Diese Aufgabe wird in einem ersten Aspekt der Erfindung durch ein Verfahren mit den Merkmalen des Anspruchs 1 in allgemeiner Weise gelöst. Weitere Aspekte der Erfindung ergeben sich aus den Unteransprüchen. Mit den weiteren Aspekten der Erfindung wird die Erfindung in besonderer Weise, teilweise in bevorzugter Weise gelöst.

Unter Fluidverbindung zwischen zwei Bereichen des Reformerrohres wird dabei jegliche Art von Verbindung verstanden, die es ermöglicht, dass ein Fluid, beispielsweise der Einsatzgasstrom oder der Synthesegasproduktstrom, von dem einen zu dem anderen der beiden Bereiche strömen kann, unbeachtlich etwaiger zwischengeschalteter Bereiche oder Bauteile.

Mit Wärmeaustauschbeziehung ist die Möglichkeit des Wärmeaustauschs oder der Wärmeübertragung zwischen zwei Bereichen des Reformerrohres gemeint, wobei alle Mechanismen des Wärmeaustauschs oder der Wärmeübertragung wie Wärmeleitung, Wärmestrahlung oder konvektiver Wärmetransport zum Tragen kommen können.

Unter Dampfreformierungsbedingungen sind die dem Fachmann an sich bekannten Verfahrensbedingungen, insbesondere von Temperatur, Druck und Verweilzeit, zu verstehen, wie sie oben beispielhaft genannt und detailliert im einschlägigen Schrifttum erörtert werden und bei denen mindestens ein Teilumsatz, bevorzugt allerdings technisch relevante Umsätze der Edukte in Synthesegasprodukte wie CO und Wasserstoff erfolgt. Entsprechend wird unter einem für die Dampfreformierung aktiven Katalysator ein Katalysator verstanden, der unter Dampfreformierungsbedingungen eben solche Umsätze bewirkt.

Die Begriffe "strukturierte Packung" und "strukturierter Katalysator" sind dem Fachmann vertraut und werden im Schrifttum verwendet. Es wird hierzu beispielhaft auf den Aufsatz von M. Grünewald und U. Kunz, "Strukturierte Katalysatoren als Bausteine multifunktionaler Reaktoren", Chemie Ingenieur Technik 2007, 79, No. 9, verwiesen.

Reformerrohre mit internem Wärmeaustausch sind im Rahmen der vorliegenden Erfindung so ausgestaltet, dass eine Rohr-in-Rohr-Anordnung vorliegt, bei der ein Innenrohr mit kleinerem Durchmesser (Wärmetauscherrohr) in einem äußeren Rohr (Mantelrohr) vorzugsweise zentral angeordnet ist. Der sich hierdurch ergebende Ringspalt wird mindestens teilweise mit Katalysator ausgefüllt, bei der vorliegenden Erfindung vorzugsweise mit strukturiertem Katalysator. Die Edukte der Dampfreformierung, also ein vorerhitzter, kohlenwasserstoffhaltiger Einsatzstrom und Dampf, treten über einen Gaseintritt am Mantelrohr in dieses ein und werden an dem im Ringspalt angeordneten Katalysator umgesetzt oder zumindest teilumgesetzt. Nach Verlassen des Katalysators durchströmt das gasförmige Rohprodukt der Dampfreformierung das Wärmetauscherrohr bevorzugt im Gegenstrom relativ zu der Gasströmung durch das Katalysatorbett. Wesentlich ist, dass hierbei ein Wärmeübergang des noch heißen Dampfreformierungs-Rohprodukts durch die Wand des Wärmetauscherrohrs auf den Katalysator und/oder den durch ihn strömenden Einsatzstrom bzw. bereits teilumgesetzten Gasstrom erfolgt. Hierdurch wird der Wärmehaushalt bereits innerhalb eines Reformerrohrs verbessert, so dass weniger Abwärme durch Dampferzeugung abgeführt werden muss.

Durch das im Inneren des strukturierten Katalysators angeordnete Wärmetauscherrohr strömt das erzeugte Rohsynthesegasprodukt zum Gasaustritt und gibt dabei einen Teil seiner fühlbaren Wärme im Gegenstrom an den strukturierten Katalysator, den durch ihn strömenden Einsatzgasstrom und somit an den am Katalysator ablaufenden Dampfreformierungsprozess ab. Dies verbessert insbesondere den radialen Wärmetransport im Reformerrohr. In einem Beispiel kann das Wärmetauscherrohr gleichzeitig Stütz- und Tragefunktionen für den strukturierten Katalysator bzw. für die einzelnen Packungssegmente aufweisen.

Als alternative Bezeichnung für solche Reformerrohre mit internem Wärmeaustausch wird auch der Begriff des Bajonett-Reformerrohrs verwendet, insbesondere dann, wenn der Gaseintritt und Gasaustritt an demselben Rohrende angeordnet sind und das andere Rohrende verschlossen ist.

Unter einem Verfahren zum Herstellen eines Wasserstoff und Kohlenoxide enthaltenden Synthesegases mit variablem Dampfexport wird verstanden, dass die spezifische Exportdampfmenge, gemessen in kg Dampf pro m_{N}³ erzeugten Wasserstoffs, durch die erfindungsgemäßen Änderungen der Verfahrensbedingungen in beabsichtigter und reproduzierbarer Weise gegenüber einer nicht erfindungsgemäßen, herkömmlichen Betriebsweise des Verfahrens variiert wird. Insbesondere wird unter einem Verfahren zum Herstellen eines Wasserstoff und Kohlenoxide enthaltenden Synthesegases mit reduziertem Dampfexport verstanden, dass die spezifische Exportdampfmenge, gemessen in kg Dampf pro m_{N}³ erzeugten Wasserstoffs, durch die erfindungsgemäßen Änderungen der Verfahrensbedingungen in beabsichtigter und reproduzierbarer Weise gegenüber einer nicht erfindungsgemäßen, herkömmlichen Betriebsweise des Verfahrens vermindert wird.

Unter der Reformierungstemperatur T_{ref} wird die Temperatur des Dampfreformierungs-Rohprodukts nach Austritt aus dem Katalysatorbett bzw. aus dem strukturieren Katalysator verstanden. Sie wird durch entsprechende, an diesem Ort angebrachte Temperaturmessvorrichtungen gemessen.

Die normierte Raumgeschwindigkeit des Einsatzgasstroms am Eintritt in die Reformerrohre wird bezogen auf das Volumen des strukturierten Katalysators in der Einheit m_{N}³/(s_{*}m_{Kat}³) angegeben.

Unter der Reformereffizienz (synonym Reformerwirkungsgrad) wird der prozentuale Anteil der von den Brennern erzeugten Wärmemenge verstanden, die auf das Prozessgas übertragen wird.

Der Erfindung liegt die Erkenntnis zugrunde, dass mit den allgemeinen und den besonderen Aspekten der Erfindung die zugrunde liegende Aufgabe vorteilhaft gelöst werden kann. Dabei wirken folgende Teilelemente bzw. Merkmale zusammen:
(1) Die Ausgestaltung des Reformerrohrs als Reformerrohr mit internem Wärmeaustausch ermöglicht eine verbesserte Wärmenutzung bereits innerhalb eines Reformerrohrs verbessert, so dass weniger Abwärme durch Dampferzeugung abgeführt werden muss.
(2) Die Verwendung eines strukturierten Katalysators ermöglicht höhere Gas-Strömungsgeschwindigkeiten durch das Reformerrohr und führt somit zu einem besseren Wärmeübergang von dem Dampfreformierungs-Rohproduktstrom auf den Katalysator und/oder den durch ihn strömenden Einsatzstrom bzw. bereits teilumgesetzten Gasstrom.
(3) Für vorgegebene Zielbereiche der Exportdampfmenge, nämlich:
   - Exportdampfmenge null,
   - niedrige Exportdampfmenge, zwischen 0 und 0,3 kg Exportdampf pro m_{N}³ erzeugten Wasserstoffs,
   - mittlere Exportdampfmenge, zwischen 0,3 und 0,8 kg Exportdampf pro m_{N}³ erzeugten Wasserstoffs,
   wirken die unter (1) und (2) genannten Merkmale besonders vorteilhaft und in synergistischer Weise zusammen, wenn bestimmte Dampfreformierungsbedingungen ausgewählt werden, wie sie in den Patentansprüchen näher definiert werden.

### Weitere Aspekte der Erfindung

In einem zweiten Aspekt der Erfindung ist das Verfahren dadurch gekennzeichnet, dass die Dampfreformierungsbedingungen eine Reformierungstemperatur T_{ref} von mindestens 920 °C, ein Dampf-Kohlenstoff-Verhältnis S/C von höchstens 2,7 mol/mol und eine normierte Raumgeschwindigkeit des Einsatzgasstroms am Eintritt in die Reformerrohre zwischen 2,5 und 3,0 m_{N}³/(s_{*}m_{Kat}³) umfassen und dass die spezifische Exportdampfmenge null ist. Untersuchungen haben gezeigt, dass mit der Auswahl der genannten Dampfreformierungsbedingungen die Erfindung in besonderer Weise gelöst wird, so dass die Erzeugung von Exportdampf vollständig unterbunden werden kann.

In einem dritten Aspekt der Erfindung ist das Verfahren dadurch gekennzeichnet, dass die Dampfreformierungsbedingungen eine Reformierungstemperatur T_{ref} von mindestens 930 °C, ein Dampf-Kohlenstoff-Verhältnis S/C von höchstens 2,7 mol/mol, bevorzugt von höchstens 2,4 mol/mol und eine normierte Raumgeschwindigkeit des Einsatzgasstroms am Eintritt in die Reformerrohre zwischen 3,5 und 4,0 m_{N}³/(s_{*}m_{Kat}³) umfassen und dass die spezifische Exportdampfmenge zwischen 0 und 0,3 kg Dampf pro m_{N}³ erzeugten Wasserstoffs beträgt. Untersuchungen haben gezeigt, dass mit der Auswahl der genannten Dampfreformierungsbedingungen die Erfindung in besonderer Weise gelöst wird, so dass die Erzeugung einer niedrigen Exportdampfmenge ermöglicht wird.

In einem vierten Aspekt der Erfindung ist das Verfahren dadurch gekennzeichnet, dass die Dampfreformierungsbedingungen eine Reformierungstemperatur T_{ref} von mindestens 930 °C, ein Dampf-Kohlenstoff-Verhältnis S/C von höchstens 2,7 mol/mol, bevorzugt von höchstens 2,4 mol/mol, meist bevorzugt von höchstens 2,1 mol/mol und eine normierte Raumgeschwindigkeit des Einsatzgasstroms am Eintritt in die Reformerrohre zwischen 3,0 und 3,5 m_{N}³/(s_{*}m_{Kat}³) umfassen und dass die spezifische Exportdampfmenge zwischen 0,3 und 0,8 kg Dampf pro m_{N}³ erzeugten Wasserstoffs beträgt. Untersuchungen haben gezeigt, dass mit der Auswahl der genannten Dampfreformierungsbedingungen die Erfindung in besonderer Weise gelöst wird, so dass die Erzeugung einer mittleren Exportdampfmenge ermöglicht wird.

In einem fünften Aspekt der Erfindung ist das Verfahren dadurch gekennzeichnet, dass das Mantelrohr und das Wärmetauscherrohr einen kreisförmigen Querschnitt und der strukturierten Katalysator einen kreisringförmigen Querschnitt hat und dass das Mantelrohr, der strukturierte Katalysator und das Wärmetauscherrohr koaxial und konzentrisch angeordnet sind, wobei der strukturierte Katalysator im Wesentlichen gasdicht abschließend zwischen der Innenwand des Mantelrohrs und der Außenwand des Wärmetauscherrohrs angeordnet ist, so dass Kurzschlussströmungen an der Innenwand des Mantelrohrs entlang und somit an der strukturierten Packung vorbei minimiert werden.

In einem sechsten Aspekt der Erfindung ist das Verfahren dadurch gekennzeichnet, dass die Wärmestromdichte zwischen der Außenwand und der Innenwand der Mantelrohre zwischen 50 und 200 kW/m² beträgt, gemittelt über die Länge der Mantelrohre. Untersuchungen haben gezeigt, dass mit der Auswahl der genannten Wärmestromdichte die Erfindung in besonderer Weise gelöst wird, so dass die Erzeugung von Exportdampfmengen zwischen null und einem mittleren Bereich der Exportdampfmenge ermöglicht wird.

In einem siebten Aspekt der Erfindung ist das Verfahren dadurch gekennzeichnet, dass der Eintritt für den Einsatzgasstrom und der Austritt für den Rohsynthesegasproduktstrom an demselben Ende des Mantelrohrs angeordnet sind. Es wird somit die sogenannte Bajonett-Bauweise der Reformerrohre erhalten. Dies erleichtert die Montage und Demontage der Reformerrohre in einem Reformerofen, da hierbei nur ein Ende bzw. eine Seite des Reformerofen zugänglich sein muss.

In einem achten Aspekt der Erfindung ist das Verfahren dadurch gekennzeichnet, dass die Reformerrohre auf einem Boden des Reformerofens stehend oder von einer Decke des Reformerofens hängend in dem Reformerofen angeordnet sind und das Ende des Mantelrohrs, an dem der Eintritt für den Einsatzgasstrom und der Austritt für den Rohsynthesegasproduktstrom angeordnet sind, aus dem Reformerofen herausragt, wobei das entgegengesetzte Ende des Mantelrohrs im Inneren des Reformerofens angeordnet ist. Dies ist besonders günstig, da auf diese Weise thermisch-mechanische Spannungen zwischen dem Eintritt für den Einsatzgasstrom und dem Austritt für den Synthesegasproduktstrom vermieden werden, die aufgrund der beträchtlichen Temperaturunterschiede bei den aus dem Stand der Technik bekannten Reformerrohren entstehen, bei denen jeweils das Eintrittsende und das Austrittsende aus dem Reformerofen herausragen. Bei letzteren werden daher aufwändige Maßnahmen, wie beispielsweise die Verwendung von Gegengewichtsystemen, Spannungskompensatoren (sog. Pigtails) oder von Seilzügen, eingesetzt, um die auftretenden Spannungen und deren negative Auswirkungen, beispielsweise eine Verformung des Reformerrohrs, zu kompensieren. Dies ist bei einer hängenden oder stehenden Anordnung des Reformerrohrs nicht mehr notwendig.

In einem neunten Aspekt der Erfindung ist das Verfahren dadurch gekennzeichnet, dass eine Vielzahl von Reformerrohren und Brennern in einem Innenraum des Reformerofens angeordnet sind und dass die Längsachsen der durch die Brenner erzeugten Flammen parallel zu den Längsachsen der Reformerrohre ausgerichtet sind, wobei die Brenner an der Decke des Reformerofens und/oder am Boden des Reformerofens angeordnet sind. Auf diese Weise kann sichergestellt werden, dass durch einen Brenner die um ihn angeordneten Reformerrohre gleichmäßig beheizt werden. Ferner wird den Reformerrohren durch die parallel verlaufenden Flammenachsen auf einer längeren Strecke Strahlungswärme zugeführt und eine lokale Überhitzung der Außenseiten der Reformerrohre vermieden.

In einem zehnten Aspekt der Erfindung ist das Verfahren dadurch gekennzeichnet, dass das mindestens teilweise katalytische Umsetzen des Einsatzstoffes unter Dampfreformierungsbedingungen in den Reformerrohren zu dem Rohsynthesegasprodukt zu mindestens 50 % erfolgt, bezogen auf die im Einsatzstoff enthaltenen Kohlenwasserstoffe.

In einem elften Aspekt der Erfindung ist das Verfahren dadurch gekennzeichnet, dass mindestens eines der Reformerrohre mehr als eine Art eines strukturierten Katalysators enthält, wobei sich die Art des strukturierten Katalysators bezieht auf dessen materielle, strukturelle oder texturelle Beschaffenheit und/oder seine spezifische katalytische Aktivität. Vorteilhaft wäre beispielsweise eine Konfiguration mit einem strukturierten Katalysator mit höherem Wärmeübergangskoeffizient, aber auch höherem Druckverlust in der Nähe des Gaseintritts in das Reformerrohr und mit einem strukturierten Katalysator mit geringerem Wärmeübergangskoeffizient, aber auch geringerem Druckverlust in der Nähe des Gasaustritts aus dem Reformerrohr, da in der Nähe des Gasaustritts aus dem Reformerrohr die Temperaturen und die Gasvolumenströme höher sind als in der Nähe des Gaseintritts in das Reformerrohr. Somit wird ein günstiger Kompromiss zwischen hohem Wärmeübergang und niedrigem Druckverlust erhalten.

In einem zwölften Aspekt der Erfindung ist das Verfahren dadurch gekennzeichnet, dass der oder die strukturierten Katalysatoren mindestens ein Element umfassen, das ausgewählt ist aus der Gruppe:
Strukturierte Packungen, Monolithe, Wabenkörper, offenzellige metallische, glasartige oder keramische Schäume, gestapelte Drahtnetze;
wobei die Elemente jeweils katalytische Aktivität für die Dampfreformierung aufweisen.

Bevorzugt wird dabei ein strukturierter Katalysator in Form einer strukturierten Packung. Diese Art von strukturiertem Katalysator bietet gute Wärmeübertragungs- und Druckverlusteigenschaften und kann so gestaltet werden, dass die Strömung bevorzugt auf die Innen- oder Außenwand des Reformerrohrs gerichtet wird, um die Wärmeübertragung weiter zu verbessern. Die Trägerstruktur des strukturierten Katalysators besteht in einem Beispiel aus metallischem Material, da hierdurch Vorteile hinsichtlich der gegenüber dem Mantelrohr gleichmäßigeren Wärmeausdehnung erhalten werden und thermisch-mechanische Spannungen zwischen Mantelrohr und strukturiertem Katalysator reduziert werden. Um die Korrosion der gasberührten Materialien mittels der Metal-Dusting-Korrosion möglichst gering zu halten, wird bevorzugt die Oberfläche der Teile der Anlage, die sich in dem für die Metal-Dusting-Korrosion kritischen Arbeitsbereich, beispielsweise im Temperaturbereich zwischen 400 und 800 °C befinden, mit einem Korrosionsschutz, beispielsweise einer Aluminiumschicht versehen. Erfahrungsgemäß sind dies im Wesentlichen die Bereiche zwischen (in Strömungsrichtung) dem Innenrohr des Reformerrohrs und dem Abhitzekessel zur Dampferzeugung.

### Ausführungsbeispiel

Weiterbildungen, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigt die einzige Figur:

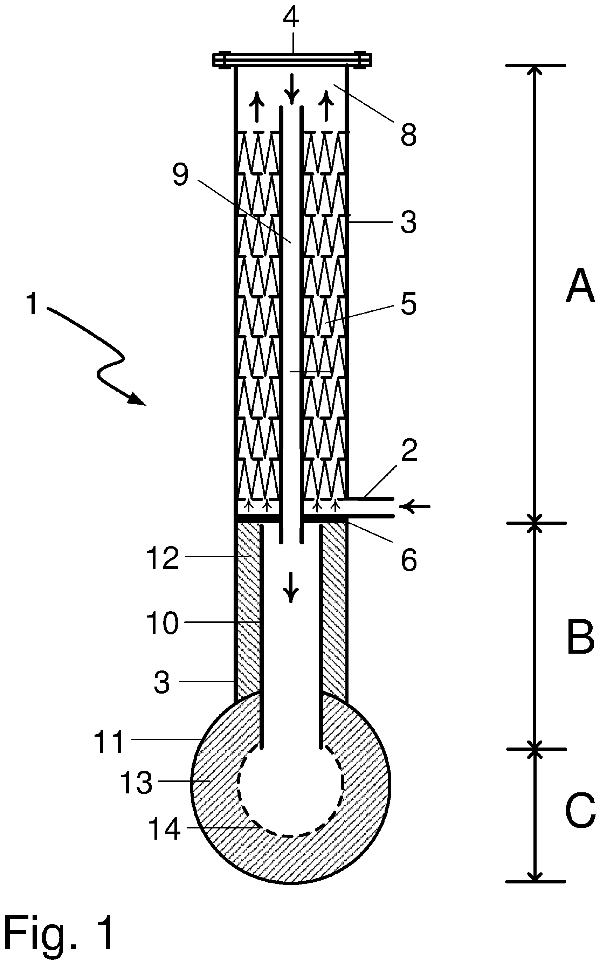

- Fig. 1: eine beispielhafte Ausgestaltung eines Reformerrohrs mit internem Wärmeaustausch und strukturiertem Katalysator zur Durchführung des erfindungsgemäßen Verfahrens.

Das in Fig. 1 bildlich dargestellte, erfindungsgemäße Reformerrohr 1 ist in die Abschnitte A (Reaktionskammer), B (Austrittskammer) und C (Sammelleitung) unterteilt.

Über eine Eintrittsleitung 2 tritt entschwefeltes Erdgas gemeinsam mit Reformierungsdampf in die im oberen Teil eines Mantelrohrs 3 angeordnete Reaktionskammer A ein. Das Mantelrohr besteht aus einem Nickel-Chrom-Stahl, beispielsweise des Typs G-X45NiCrNbTi3525. Die Eintrittstemperatur des Einsatzgases beträgt 600 °C, die auf das Katalysatorvolumen bezogene Raumgeschwindigkeit beträgt typischerweise 4000 bis 5000 m_{N}³/(m³ h).

Im vorliegenden Ausführungsbeispiel ist das Reformerrohr senkrecht stehend mit dem offenen Rohrende des Mantelrohrs 3 in oberer Position angeordnet und wird von außen mittels Brennern beheizt (nicht dargestellt in Fig. 1). Das offene Rohrende des Mantelrohrs ist beim Betrieb des Reformerrohres mit einer Verschlussvorrichtung 4, beispielsweise einem aufgeflanschten Deckel, verschlossen, der für Revisionsvorgänge und zum Befüllen bzw. Entleeren des Katalysators geöffnet werden kann.

Das Erdgas und der Reformierungsdampf treten nach dem Eintritt in das Mantelrohr in einen strukturierten Katalysator 5 ein, der aus einzelnen Packungssegmenten zusammengesetzt ist und hinsichtlich seines Aufbaus dem in der US 2012/0195801 A1 beschriebenen strukturierten Katalysator entspricht. Er weist eine spezifische Oberfläche von 1100 m²/m³ auf und ist mit einer nickelhaltigen Aktivschicht ausgestattet, die für die Dampfreformierung katalytisch aktiv ist. Der strukturierte Katalysator ist ferner so aufgebaut, dass ein signifikanter Anteil der Gasströmung radial abgelenkt wird. Hierdurch trifft ein Teil der Gasströmung auf die Innenwand des Reaktionsrohres, wodurch der radiale Wärmeübergang verbessert wird. Der Effekt ist allerdings begrenzt, so dass eine weitere Verbesserung des radialen Wärmeübergangs, wie sie mit dem erfindungsgemäßen Reformerrohr erzielt wird, von Vorteil ist.

Die Einsatzstoffe strömen sodann aufwärts durch den strukturierten Katalysator, wobei die endotherme Dampfreformierungsreaktion stattfindet. Das teilumgesetzte Erdgas, das neben Kohlenoxiden und Wasserstoff auch noch nicht umgesetztes Methan enthält, tritt nach Verlassen des strukturierten Katalysators in einen Freiraum 8 ein, der an dem verschlossenen Rohrende 4 des Mantelrohres angeordnet ist. Anschließend tritt der teilumgesetzte Einsatzgasstrom in das Eintrittsende eines innerhalb der Katalysatorschüttung angeordneten, gerade verlaufenden Wärmetauscherrohrs 9 ein. Der durch das Wärmetauscherrohr 9 strömende Gasstrom gibt einen Teil seiner fühlbaren Wärme im Gegenstrom an die Katalysatorschüttung und den durch sie strömenden Einsatzgasstrom ab. Das Wärmetauscherrohr bestehen aus Werkstoffen mit guter Beständigkeit gegen die Metal Dusting-Korrosion wie z.B. Alloy 601, 602 CA, 617, 690, 692, 693, HR 160, HR 214, Kupfer enthaltende Legierungen oder sogenannte Mehrschichtmaterialien, bei denen die Rohre mit Zinn-Nickel- oder Aluminium-Nickel-Legierungen beschichtet sind. Alternativ oder zusätzlich sind die Austrittsenden des Wärmetauscherrohrs auf der Innenseite und an den durch den Trennboden durchgeführten Anteilen auch auf der Außenseite mit einer Korrosionsschutzschicht ausgestattet. Im vorliegenden Beispiel ist dies eine Aluminium-Diffusionsschicht.

Nach Durchströmen des Wärmetauscherrohrs tritt der Synthesegasproduktstrom in die Austrittskammer B ein. Dazu wird das Austrittsende des Wärmetauscherrohrs 9 durch einen Trennboden 6 durchgeführt und auf diese Weise fixiert. Es mündet dann austrittsseitig in ein Innenrohr 10 ein, das die Verbindung zwischen dem Wärmetauscherrohr 9 und einer Sammelleitung 11 darstellt. Das Innenrohr ist ebenfalls aus einem der oben genannten, metallischen Werkstoffe gefertigt und seine Innenwand und bevorzugt auch seine Außenwand mit einer Aluminium-Diffusionsschicht als Korrosionsschutzschicht ausgestattet. Alternativ kann auch ein aus einem keramischen Werkstoff hergestelltes Innenrohr verwendet werden.

Zwischen der Außenwand des Innenrohrs und der Innenwand des Mantelrohrs ist ein gasdurchlässiges Isoliermaterial 12 angebracht. Hierfür können faserbasierte Isoliermaterialien, aber auch in sich formstabile keramische Formkörper verwendet werden. Letztere sind besonders vorteilhaft, da sie besonders einfach montiert und demontiert werden können. Aufgrund ihrer Formstabilität können sie bei der Montage einfach in den Ringraum zwischen Mantelrohr und Innenrohr hineingestellt werden, ohne dass es besonderer Befestigungsmittel bedarf.

Die Sammelleitung 11 ist auf ihrer Innenseite mit Isoliermaterial 13 und/oder einer korrosionsresistenten, beispielsweise keramischen Beschichtung 14 versehen, die eine erhöhte Beständigkeit gegen die Metal Dusting-Korrosion aufweisen. Über die Sammelleitung wird der Synthesegasproduktstrom aus dem Reformerrohr 1 ausgeleitet und wird der weiteren Aufarbeitung zugeführt. Diese kann je nach Verwendungszweck des Synthesegasproduktes eine Kohlenmonoxid-Konvertierung, eine Gaswäsche zur Abtrennung von Kohlendioxid, eine Druckwechseladsorption zur Wasserstoffabtrennung sowie weitere Aufarbeitungsstufen umfassen.

### Zahlenbeispiele

Den in den nachfolgenden Tabellen gezeigten Beispielen liegt eine gleiche Produktionskapazität an Wasserstoff und Dampf zugrunde. Alle Beispiele gehen von "End of Run"-Bedingungen (Ende eines Katalysatorzyklus) hinsichtlich der Katalysatoraktivität aus.

Den erfindungsgemäßen Beispielen liegen Ausgestaltungen des Reformers mit Bajonettrohren mit strukturiertem Katalysator zugrunde. Der Dampfexport liegt zwischen 0 und 0,8 kg Dampf pro m_{N}³ erzeugten Wasserstoffs. Die Reformierungstemperatur liegt erfindungsgemäß oberhalb von 900 °C. Mit der Erfindung werden einige oder alle der folgenden Vorteile im Vergleich zu Verfahren gemäß Stand der Technik erhalten: Höherer Kohlenwasserstoff-Umsatz, höherer Reformerwirkungsgrad, geringerer Gesamt-Erdgas-Verbrauch, geringeres S/C-Verhältnis.

### Ausgestaltungen des Verfahrens für Dampfexport null bzw. niedrigen Dampfexport (0 bis 0,3 kg Exportdampf pro m_{N}³ erzeugten Wasserstoffs)

Gemäß des Stands der Technik wird empfohlen, für Ausgestaltungen einer Reformeranlage mit Bajonettrohren und strukturiertem Katalysator eine reduzierte Anzahl von Reformerrohren vorzusehen, um die Investitionskosten zu senken.

Bei einer Reformeranlage ohne Dampfexport werden jedoch die Gesamt-Wasserstoff-Produktionskosten im Wesentlichen durch den Erdgasverbrauch dominiert, dagegen weniger durch die Investitionskosten. In Tabelle 1 werden daher für den Fall einer Reformeranlage ohne Dampfexport verschiedene Ausführungsformen mit Bajonettrohren verglichen.

Die in Tabelle 1, Spalte 2 gezeigte Ausgestaltung zeigt ein Design gemäß Stand der Technik mit Bajonettrohren und Katalysatorpellets. Diese Ausgestaltung weist folgende Nachteile auf:
(1) Um eine Fluidisierung zu verhindern, darf ein bestimmter Einsatzgas-Massenstrom nicht überschritten werden, was eine hohe Anzahl von Reformerrohren und/oder einen hohen Rohrdurchmesser erfordert. Damit steigt der Investitionsaufwand und der geringere Massenstrom pro Reformerrohr verringert den Wärmeübergangskoeffizienten.
(2) Katalysatorpellet-Schüttungen erfordern ein Mindestverhältnis von Pellet-Durchmesser zu Ringraum, um eine akzeptable Bettporosität zu erhalten und einen Bypass am Katalysatorbett vorbei zu vermeiden. Dies führt zu einem höheren Rohrdurchmesser, der thermisch-mechanische Spannungen erhöht, so dass die maximal zulässige Rohrdicke bei einer niedrigeren Reformierungstemperatur erreicht wird, wodurch die Reformerleistungen, beispielweise der Kohlenwasserstoff-Umsatz oder die Reformereffizienz, begrenzt werden.

Die in Tabelle 1, Spalte 3 gezeigte Ausgestaltung beinhaltet Bajonettrohre mit strukturiertem Katalysator, in der vom Stand der Technik vorgeschlagenen Konfiguration mit weniger Rohren als im Fall der Spalte 2. Es werden jedoch verschiedene nachteilige Effekte beobachtet, wenn die Anzahl der Rohre verringert wird:
(1) Der höhere Einsatzgas-Massenstrom pro Reformerrohr führt zu einer niedrigeren Verweilzeit, was durch die größere geometrische Oberfläche des strukturierten Katalysators etwas abgemildert wird. Die Annäherung an das Reaktionsgleichgewicht nimmt folglich zu, was zu einem höheren Erdgas-Verbrauch für eine gegebene Wasserstoff-Produktion führt.
(2) Bei gegebener Reformerleistung und reduzierter Anzahl der Reformerrohre steigt die maximale Wandtemperatur, was sich negativ auf die Lebensdauer der Reformerrohre auswirken kann.
(3) Die hohe maximale Wandtemperatur führt zu einer maximal zulässigen Rohrwandstärke, was eine weitere Erhöhung der Reformierungstemperatur ausschließt.
(4) Die reduzierte Anzahl der Reformerrohre führt nicht zu signifikanten Einsparungen bei den Investitionskosten, da der strukturierte Katalysator im Vergleich zu Katalysatorpellets sehr teuer ist

Auch bei einer Reformeranlage mit niedrigem Dampfexport (0 bis 0,3 kg Exportdampf pro m_{N}³ erzeugten Wasserstoffs) werden die Gesamt-Wasserstoff-Produktionskosten im Wesentlichen durch den Erdgasverbrauch dominiert, dagegen weniger durch die Investitionskosten. In Tabelle 2 werden für den Fall einer Reformeranlage mit niedrigem Dampfexport verschiedene Ausführungsformen mit Bajonettrohren verglichen.

Bei den in Tabelle 2, Spalte 2 und Spalte 3 gezeigten Fällen handelt es sich um Ausgestaltungen mit Katalysatorpellets bzw. mit strukturiertem Katalysator, wobei im Fall der Spalte 3 versucht wird, mit einer reduzierten Anzahl von Reformerrohren Einsparungen zu erzielen. Während die Investitionskosten in Ausgestaltungen mit niedrigem Dampfexport die Wirtschaftlichkeit etwas mehr beeinflussen als im Beispiel ohne Dampfexport, sind die Nachteile der in Spalte 2 und Spalte 3 gezeigten Fälle im Wesentlichen die gleichen wie in den Fällen der Tabelle 1, Spalte 2 und Spalte 3.

### Ausgestaltungen des Verfahrens für mittleren Dampfexport (0,3 bis 0,8 kg Exportdampf pro m_{N}³ erzeugten Wasserstoffs)

Gemäß des Stands der Technik wird vorgeschlagen, bei einem Dampfreformierungsverfahren mit mittlerem Dampfexport die Reformerrohre als Normalrohre mit geradem Durchgang, also ohne interne Wärmerückgewinnung, und mit Katalysatorpellets oder mit strukturiertem Katalysator auszustatten. Im letzteren Fall empfiehlt der Stand der Technik, beispielsweise laut der Patentveröffentlichungen EP 1944269 B1 oder US 7501078 B2, eine Ausgestaltung mit einer reduzierten Anzahl von Reformerrohren, um Einsparungen zu erzielen.

Bei einer Anlage mit mittlerem Dampf-Export haben die Investitionskosten einen größeren Anteil an den Gesamtkosten für die Wasserstoff-Produktion als bei einem Szenario ohne Dampfexport oder mit niedrigem Dampfexport, aber die Gesamtwirtschaftlichkeit wird immer noch eindeutig durch den Erdgasverbrauch bestimmt.

In Tabelle 3 werden für den Fall einer Reformeranlage mit mittlerem Dampfexport verschiedene Ausführungsformen mit Normalrohren mit Pelletschüttung oder strukturiertem Katalysator und mit Bajonettrohren mit strukturiertem Katalysator verglichen. Dabei weist der in Spalte 2 gezeigte Fall folgende Limitierungen auf:
(1) Aufgrund der begrenzten Reformereffizienz einer Ausgestaltung mit Normalrohren wird die angestrebte Exportdampfmenge bereits bei einer moderaten Reformierungstemperatur erreicht. Da andere Betriebsparameter, wie beispielweise die Verbrennungsluft-Vorwärmtemperatur, bereits an ihren jeweiligen oberen Grenzwerten angelangt sind, kann die Reformierungstemperatur nicht weiter erhöht werden, ohne mehr Dampf zu erzeugen, was den thermischen Gesamtwirkungsgrad des Reformierungsverfahrens verringern würde.

Der in Tabelle 3, Spalte 3 gezeigte Fall beinhaltet eine Ausgestaltung mit Normalrohren mit geradem Durchgang ohne Wärmerückgewinnung mit strukturiertem Katalysator und einer reduzierten Anzahl von Reformerrohren. Diese Ausgestaltung führt jedoch zu verschiedenen Nachteilen:
(1) Die Reformierungstemperatur kann nicht erhöht werden, ohne überschüssigen Dampf zu erzeugen, wodurch der thermische Gesamtwirkungsgrad des Reformierungsverfahrens reduziert wird.
(2) Die reduzierte Anzahl von Reformerrohren führt nicht zu signifikanten Einsparungen bei den Investitionskosten, da der strukturierte Katalysator im Vergleich zu Katalysatorpellets sehr teuer ist.

### Erfindungsgemäße Ausgestaltungen

Erfindungsgemäße Ausgestaltungen von Dampfreformierungsverfahren ohne Dampfexport bzw. mit niedrigem Dampfexport (0 bis 0,3 kg Exportdampf pro m_{N}³ erzeugten Wasserstoffs) weisen die folgenden Merkmale auf, die darauf abzielen, die Reformereffizienz und die Reformierungstemperatur so weit wie möglich zu erhöhen:
In der in Tabelle 1 gezeigten, erfindungsgemäßen Ausgestaltung in Spalte 4 wird der Rohrdurchmesser verringert und die Anzahl der Reformerrohre erhöht, um mechanische Limitierungen zu überwinden. Dies erlaubt es, die Reformiertemperatur über 900 °C hinaus zu erhöhen. Die Verringerung des Rohrdurchmessers ist dank der Verwendung des strukturierten Katalysators möglich, der an den kleinen Durchmesser und Ringraum angepasst werden kann.

Die erhöhte Reformierungstemperatur verschiebt das Reaktionsgleichgewicht in Richtung eines höheren Kohlenwasserstoff-Umsatzes im Reformer, erhöht gleichzeitig den Wirkungsgrad des Reformers (Reformereffizienz) und reduziert den Gesamt-Erdgas-Verbrauch, obwohl die Austauschfläche für den Wärmeaustausch im Vergleich zum Referenzfall in Spalte 2 abgenommen hat. Die in den Spalten 2 und 3 gezeigten Fälle sind aufgrund der hohen Rohrdicke der Reformerrohre bezüglich der maximal erreichbaren Reformierungstemperatur eingeschränkt.

Bei erfindungsgemäßen Ausgestaltungen von Dampfreformierungsverfahren mit mittlerem Dampfexport (0,3 bis 0,8 kg Exportdampf pro m_{N}³ erzeugten Wasserstoffs) wäre es wenig praktikabel, ein Bajonettrohr mit Katalysatorpellets vorzusehen, da die Grenzwerte für verschiedene Verfahrensparameter bereits bei niedrigeren Dampfexportwerten erreicht würden. Dies gilt insbesondere für die Reformierungstemperatur, die ihrerseits durch die maximale Rohrwandstärke eingeschränkt ist. Durch die Verwendung strukturierten Katalysators können jedoch auch für mittleren Dampfexport Bajonettrohre statt Normalrohren verwendet werden, wodurch folgende Vorteile erzielt werden:
(1) Die wesentlich höhere Reformierungstemperatur im erfindungsgemäßen Fall der Tabelle 3, Spalte 4 führt zu einem höheren Kohlenwasserstoff-Umsatz, einer höheren Reformereffizienz und einem geringeren Gesamt-Erdgas-Verbrauch als in den Fällen mit Normalrohren, Spalten 2 und 3, ohne dass dank der internen Wärmerückgewinnung ein Überschuss an Dampf entsteht.
(2) Aufgrund der Nutzung der fühlbaren Wärme des erzeugten Rohsynthesegases kann dieser hohe Kohlenwasserstoff-Umsatz und eine höhere Reformereffizienz ohne Erhöhung des durchschnittlichen externen Wärmestroms von den Brennern auf die Reformerrohren und mit einer reduzierten Anzahl von Reformerrohren im Vergleich zu den in den Tabelle 3, Spalten 2 und 3 gezeigten Fällen erreicht werden.
(3) Ferner kann hierdurch das S/C-Verhältnis bei der Dampfreformierung abgesenkt werden, was in Bezug auf Investitions- und Betriebskosten von Vorteil ist.

**Tabelle 1: Verfahrensbedingungen für Dampfreformierungsverfahren ohne Dampfexport**

| | Bajonettrohr, Pelletschüttung | Bajonettrohr, strukturierter Katalysator, reduzierte Rohranzahl | Bajonettrohr, strukturierter Katalysator (Erfindung) |
|---|---|---|---|
| Reformierungstemperatur T_{ref} (°C) | 885 | 885 | 930 |
| Dampf/Kohlenstoff S/C (mol/mol) | 3.05 | 3.05 | 2.65 |
| Wärmestromdichte pro Rohr (kW/m²) | 64.9 | 80.5 | 78.4 |
| Normierte Raumgeschwindigkeit am Eingang Reformer (m_{N}³/s/m³) | 1.22 | 3.49 | 2.89 |
| Methan-Umsatz (%) | 75.9 | 75.1 | 83.5 |
| Reformereffizienz (%) | 61.23 | 57.30 | 62.09 |
| Austauschfläche (m²) | 846.9 | 682.2 | 800.0 |
| Anzahl Reformerrohre im Reformerofen | 144 | 116 | 164 |
| Erdgasverbrauch gesamt (Einsatzgas + Heizgas) | 20660 | 20699 | 20181 |
| Innendurchmesser Mantelrohr (m) | 0.125 | 0.125 | 0.100 |
| Wanddicke Mantelrohr (m) | 0.0155 | 0.0155 | 0.0147 |

**Tabelle 2: Verfahrensbedingungen für Dampfreformierungsverfahren mit niedrigem Dampfexport (0 bis 0,3 kg Exportdampf pro m_{N}³ erzeugten Wasserstoffs)**

| | Bajonettrohr, Pelletschüttung | Bajonettrohr, strukturierter Katalysator, reduzierte Rohranzahl | Bajonettrohr, strukturierter Katalysator (Erfindung) |
|---|---|---|---|
| Reformierungstemperatur T_{ref} (°C) | 877 | 877 | 935 |
| Dampf/Kohlenstoff S/C (mol/mol) | 2.91 | 2.91 | 2.36 |
| Wärmestromdichte pro Rohr (kW/m²) | 65.2 | 95.2 | 107.8 |
| Normierte Raumgeschwindigkeit am Eingang Reformer (m_{N}³/s/m³) | 1.22 | 3.90 | 3.89 |
| Methan-Umsatz (%) | 75.8 | 75.0 | 81.6 |
| Reformereffizienz (%) | 57.57 | 54.46 | 58.35 |
| Austauschfläche (m²) | 841.4 | 607.7 | 637.0 |
| Anzahl Reformerrohre im Reformerofen | 144 | 104 | 160 |
| Erdgasverbrauch gesamt (Einsatzgas + Heizgas) | 21469 | 21497 | 20721 |
| Innendurchmesser Mantelrohr (m) | 0.125 | 0.125 | 0.076 |
| Wanddicke Mantelrohr (m) | 0.015 | 0.015 | 0.0148 |

**Tabelle 3: Verfahrensbedingungen für Dampfreformierungsverfahren mit mittlerem Dampfexport (0,3 bis 0,8 kg Exportdampf pro m_{N}³ erzeugten Wasserstoffs)**

| | Normalrohr, Pelletschüttung | Normalrohr, strukturierter Katalysator | Bajonettrohr, strukturierter Katalysator (Erfindung) |
|---|---|---|---|
| Reformierungstemperatur T_{ref} (°C) | 890 | 890 | 934 |
| Dampf/Kohlenstoff S/C (mol/mol) | 2.38 | 2.38 | 2.02 |
| Wärmestromdichte pro Rohr (kW/m²) | 85.1 | 104.2 | 85.6 |
| Normierte Raumgeschwindigkeit am Eingang Reformer (m_{N}³/s/m³) | 1.19 | 3.03 | 3.16 |
| Methan-Umsatz (%) | 78.1 | 77.5 | 83.3 |
| Reformereffizienz (%) | 51.40 | 51.40 | 56.65 |
| Austauschfläche (m²) | 1338.2 | 1093.3 | 1176.2 |
| Anzahl Reformerrohre im Reformerofen | 306 | 250 | 240 |
| Erdgasverbrauch gesamt (Einsatzgas + Heizgas) | 33353 | 33403 | 32664 |
| Innendurchmesser Mantelrohr (m) | 0.100 | 0.100 | 0.100 |
| Wanddicke Mantelrohr (m) | 0.008 | 0.008 | 0.015 |

### Bezugszeichenliste

- [1]: Reformerrohr
- [2]: Eintrittsleitung
- [3]: Mantelrohr
- [4]: Verschlussvorrichtung
- [5]: strukturierter Katalysator
- [6]: Trennboden
- [7]: Katalysatorschüttung
- [8]: Freiraum
- [9]: Wärmetauscherrohr
- [10]: Innenrohr
- [11]: Sammelleitung
- [12]: Isolierschicht
- [13]: Isolierschicht
- [14]: Beschichtung

- [A]: Reaktionskammer
- [B]: Austrittskammer
- [C]: Sammelleitung

## Patentansprüche

1. Verfahren zum Herstellen eines Wasserstoff und Kohlenoxide enthaltenden Synthesegases mit reduziertem Dampfexport durch katalytisches Dampfreformieren eines kohlenwasserstoffhaltigen Einsatzgases, bevorzugt Erdgas, mit Dampf unter Dampfreformierungsbedingungen in einer Vielzahl von Reformerrohren in einem durch Brenner beheizten Reformerofen, wobei ein Dampfreformierungsrauchgas gebildet wird,
wobei die Reformerrohre folgende Bestandteile umfassen:
(a) ein äußeres, drucktragendes, mittels der Brenner beheiztes Mantelrohr mit einem Eintritt für einen Einsatzgasstrom und einem Austritt für einen Rohsynthesegasproduktstrom,
(b) mindestens einen in dem Mantelrohr angeordneten, für die Dampfreformierung katalytisch aktiven strukturierten Katalysator mit einem Eintrittsende und einem Austrittsende,
(c) ein innerhalb des Mantelrohrs und innerhalb des strukturierten Katalysators angeordnetes Wärmetauscherrohr, dessen Eintrittsende in Fluidverbindung mit dem Austrittsende des strukturierten Katalysators steht und dessen Austrittsende in Fluidverbindung mit dem Austritt für den Rohsynthesegasproduktstrom steht,
(d) wobei der Einsatzgasstrom über den Eintritt in das Mantelrohr eingeleitet wird, zunächst den strukturierten Katalysator und nachfolgend im Gegenstrom das Wärmetauscherrohr durchströmt und der erzeugte Rohsynthesegasproduktstrom über den Austritt aus dem Mantelrohr ausgeleitet wird,
(e) wobei das Wärmetauscherrohr und der durch dieses strömende Gasstrom in einer Wärmeaustauschbeziehung mit dem strukturierten Katalysator und dem durch diesen strömenden Gasstrom steht,
wobei das Verfahren folgende Schritte umfasst:
(f) Bereitstellen des kohlenwasserstoffhaltigen Einsatzgases und Zugabe von Reformierungsdampf und/oder von Kohlendioxid,
(g) mindestens teilweises katalytisches Umsetzen des Einsatzgases unter Dampfreformierungsbedingungen in den Reformerrohren zu einem Kohlenoxide und Wasserstoff enthaltenden Rohsynthesegasprodukt, wobei die Dampfreformierungsbedingungen eine Reformierungstemperatur T_{ref} von mindestens 900 °C, ein Dampf-Kohlenstoff-Verhältnis S/C von höchstens 2,8 mol/mol und eine normierte Raumgeschwindigkeit des Einsatzgasstroms am Eintritt in die Reformerrohre zwischen 2 und 5 m_{N}³/(s_{*}m_{Kat}³) umfassen,
(h) Ausleiten des Rohsynthesegasprodukts aus den Reformerrohren,
(i) Ausleiten des Reformierungsrauchgases aus dem Reformerofen,
(j) Abkühlen mindestens eines Teils des Reformierungsrauchgases und/oder des Rohsynthesegasprodukts durch indirekten Wärmetausch mit Kühlwasser, wobei Dampf erzeugt wird, der mindestens teilweise als Exportdampf aus dem Verfahren ausleitbar ist, wobei die spezifische Exportdampfmenge zwischen 0 und 0,8 kg Dampf pro m_{N}³ erzeugten Wasserstoffs beträgt.

2. Verfahren nach Anspruch 1, **dadurch gekennzeichnet, dass** die Dampfreformierungsbedingungen eine Reformierungstemperatur T_{ref} von mindestens 920 °C, ein Dampf-Kohlenstoff-Verhältnis S/C von höchstens 2,7 mol/mol und eine normierte Raumgeschwindigkeit des Einsatzgasstroms am Eintritt in die Reformerrohre zwischen 2,5 und 3,0 m_{N}³/(s_{*}m_{Kat}³) umfassen und dass die spezifische Exportdampfmenge null ist.

3. Verfahren nach Anspruch 1, **dadurch gekennzeichnet, dass** die Dampfreformierungsbedingungen eine Reformierungstemperatur T_{ref} von mindestens 930 °C, ein Dampf-Kohlenstoff-Verhältnis S/C von höchstens 2,7 mol/mol, bevorzugt von höchstens 2,4 mol/mol und eine normierte Raumgeschwindigkeit des Einsatzgasstroms am Eintritt in die Reformerrohre zwischen 3,5 und 4,0 m_{N}³/(s_{*}m_{Kat}³) umfassen und dass die spezifische Exportdampfmenge zwischen 0 und 0,3 kg Dampf pro m_{N}³ erzeugten Wasserstoffs beträgt.

4. Verfahren nach Anspruch 1, **dadurch gekennzeichnet, dass** die Dampfreformierungsbedingungen eine Reformierungstemperatur T_{ref} von mindestens 930 °C, ein Dampf-Kohlenstoff-Verhältnis S/C von höchstens 2,7 mol/mol, bevorzugt von höchstens 2,4 mol/mol, meist bevorzugt von höchstens 2,1 mol/mol und eine normierte Raumgeschwindigkeit des Einsatzgasstroms am Eintritt in die Reformerrohre zwischen 3,0 und 3,5 m_{N}³/(s_{*}m_{Kat}³) umfassen und dass die spezifische Exportdampfmenge zwischen 0,3 und 0,8 kg Dampf pro m_{N}³ erzeugten Wasserstoffs beträgt.

5. Verfahren nach einem der vorigen Ansprüche, **dadurch gekennzeichnet, dass** das Mantelrohr und das Wärmetauscherrohr einen kreisförmigen Querschnitt und der strukturierten Katalysator einen kreisringförmigen Querschnitt hat und dass das Mantelrohr, der strukturierte Katalysator und das Wärmetauscherrohr koaxial und konzentrisch angeordnet sind, wobei der strukturierte Katalysator im Wesentlichen gasdicht abschließend zwischen der Innenwand des Mantelrohrs und der Außenwand des Wärmetauscherrohrs angeordnet ist.

6. Verfahren nach einem der vorigen Ansprüche, **dadurch gekennzeichnet, dass** die Wärmestromdichte zwischen der Außenwand und der Innenwand der Mantelrohre zwischen 50 und 200 kW/m² beträgt, gemittelt über die Länge der Mantelrohre.

7. Verfahren nach einem der vorigen Ansprüche, **dadurch gekennzeichnet, dass** der Eintritt für den Einsatzgasstrom und der Austritt für den Rohsynthesegasproduktstrom an demselben Ende des Mantelrohrs angeordnet sind.

8. Verfahren nach Anspruch 7, **dadurch gekennzeichnet, dass** die Reformerrohre auf einem Boden des Reformerofens stehend oder von einer Decke des Reformerofens hängend in dem Reformerofen angeordnet sind und das Ende des Mantelrohrs, an dem der Eintritt für den Einsatzgasstrom und der Austritt für den Rohsynthesegasproduktstrom angeordnet sind, aus dem Reformerofen herausragt, wobei das entgegengesetzte Ende des Mantelrohrs im Inneren des Reformerofens angeordnet ist.

9. Verfahren nach einem der vorigen Ansprüche, **dadurch gekennzeichnet, dass** eine Vielzahl von Reformerrohren und Brennern in einem Innenraum des Reformerofens angeordnet sind und dass die Längsachsen der durch die Brenner erzeugten Flammen parallel zu den Längsachsen der Reformerrohre ausgerichtet sind, wobei die Brenner an der Decke des Reformerofens und/oder am Boden des Reformerofens angeordnet sind.

10. Verfahren nach einem der vorigen Ansprüche, **dadurch gekennzeichnet, dass** das mindestens teilweise katalytische Umsetzen des Einsatzstoffes unter Dampfreformierungsbedingungen in den Reformerrohren zu dem Rohsynthesegasprodukt zu mindestens 50 % erfolgt, bezogen auf die im Einsatzstoff enthaltenen Kohlenwasserstoffe.

11. Verfahren nach einem der vorigen Ansprüche, **dadurch gekennzeichnet, dass** mindestens eines der Reformerrohre mehr als eine Art eines strukturierten Katalysators enthält, wobei sich die Art des strukturierten Katalysators bezieht auf dessen materielle, strukturelle oder texturelle Beschaffenheit und/oder seine spezifische katalytische Aktivität.

12. Verfahren nach einem der vorigen Ansprüche, **dadurch gekennzeichnet, dass** der oder die strukturierten Katalysatoren mindestens ein Element umfassen, das ausgewählt ist aus der Gruppe:
Strukturierte Packungen, Monolithe, Wabenkörper, offenzellige metallische, glasartige oder keramische Schäume, gestapelte Drahtnetze;
wobei die Elemente jeweils katalytische Aktivität für die Dampfreformierung aufweisen.
